# EUROPÄISCHE PATENTSCHRIFT

(11) **EP 2 447 218 B1**
(45) Veröffentlichungstag und Bekanntmachung des Hinweises auf die Patenterteilung: **24.06.2015**
(21) Anmeldenummer: 10189421.0
(22) Anmeldetag: 29.10.2010
(51) Int. Cl.: C02F 1/44, B01D 65/02, B01D 65/08, C02F 1/461, C02F 1/467, C02F 1/66, C02F 1/74, C02F 103/10

(54) **Verfahren zur Aufarbeitung von Minenwässern**
Method for processing mine waters
Procédé de préparation d'eaux de mines

(43) Veröffentlichungstag der Anmeldung: 02.05.2012
(73) Patentinhaber: Siemens Aktiengesellschaft, 80333 München (DE)
(72) Erfinder: Haseneder, Roland Dr., 09599, Freiberg (DE); Härtel, Georg Pr., 09599, Freiberg (DE); Rieger, Andre, 09599, Freiberg (DE); Schmidt, Frank Dr., 90489, Nürnberg (DE); Steinberger, Paul, 09599, Freiberg (DE); Zeng, Yun, 91052, Erlangen (DE)

(56) Entgegenhaltungen:
- WO-A1-99/33551
- WO-A1-2009/020517
- Zhong C-M; Xu Z-L; Fang X-H; Cheng L: "Treatment of acid mine drainage (AMD) by ultra-low-pressure reverse osmosis and nanofiltration", Environmental Engineering Science, Bd. 24, Nr. 9 1. November 2007 (2007-11-01), Seiten 1297-1306, XP002626187, ISSN: 1092-8758, DOI: 10.1089/ees.2006.0245 Gefunden im Internet: URL:http://www.liebertonline.com/doi/pdf/1 0.1089/ees.2006.0245 [gefunden am 2011-03-03]
- AL-ZOUBI H, RIEGER A, STEINBERGER P, PELZ W, HASENEDER R, HÄRTEL G: "Optimization Study for Treatment of Acid Mine Drainage Using Membrane Technology", SEPARATION SCIENCE AND TECHNOLOGY, Bd. 45, Nr. 14, September 2010 (2010-09), Seiten 2004-2016, XP008133947, ISSN: 0149-6395, DOI: 10.1080/01496395.2010.480963

## Beschreibung

Die Erfindung betrifft ein Verfahren zur Aufarbeitung von Minenwässern mittels einer Membranfiltrationsanlage gemäß Anspruch 1.

Im Bergbau fallen in unterschiedlichsten Aufbereitungsverfahren, wie beispielsweise beim Mahlen oder Flotieren des abgebauten Gesteins, oder bei der Veredelung des Materials verschiedenste Prozess- und Aufbereitungswässer an. Diese enthalten neben Gangart auch Chemikalien, welche bei der Aufbereitung zugesetzt werden, und werden derzeit in großen Mengen in Speichereinrichtungen geleitet. Mit der Zeit sinkt aufgrund fortschreitender chemischer Reaktionen der pH-Wert in den gespeicherten Prozess- und Aufbereitungswässern ab und Metallionen, welche toxisch sein können, werden aus der Gangart herausgelöst, die sich in der Flüssigphase anreichern. Weiterhin ist ein Abwasserstrom zu berücksichtigen, der sich zusammensetzt aus einerseits Abwässern aus aktiven und bereits aufgegebenen Tief- und Tagebaugruben und andererseits Sickerwasser aus Aufbereitungsrückständen, Abraum und anderen mineralischen Abfallmengen. Dieser Abwasserstrom ist durch einen niedrigen pH-Wert und einen hohen Sulfatgehalt gekennzeichnet und enthält gelöste Metalle unterschiedlicher Art. Daher wird der Abwasserstrom auch als "saurer Minenablauf" (acid mine drainage AMD) oder "saurer Gesteinsablauf" (acid rock drainage ARD) bezeichnet. Er entsteht durch Oxidation sulfidischer Minerale aufgrund einer Infiltration mit Oberflächenwasser, Grundwasser und Sauerstoff aus der Luft, wie auch einer Aktivität von Sulfid-oxidierenden Bakterien wie Acidothiobactillus ferrooxidans und Acidothiobactillus thiooxidans.
Die Prozess- und Aufbereitungswässer vor und während der Speicherung sowie der Abwasserstrom werden, einzeln oder auch in Mischung miteinander, nachfolgend vereinfachend als Minenwässer bezeichnet.

Aufgrund stetig steigender Preise für Frischwasser und einem wachsenden Bewusstsein für das Umweltrisiko, das derartige Minenwässer z.B. im Hinblick auf eine Verunreinigung von Oberflächen- und Grundwasser darstellen, gewinnt das Thema Aufbereitung und Wiederverwendung von Minenwässern ständig an Bedeutung.

Es sind bereits diverse Aktiv- und Passivtechnologien bekannt, Minenwässer zu behandeln. In der Veröffentlichung "Mine water treatment by membrane filtration processes - Experimental investigations on applicability", von A. Rieger et al., präsentiert auf der Konferenz zu Membranen in der Trinkwassererzeugung und der Abwasserbehandlung vom 20.-22.10.2008 in Toulouse, Frankreich, siehe "Desalination and Water Treatment", 6(2009)54-60, www.deswater.com, sind als bevorzugte Behandlungsverfahren folgende beschrieben:
Erstens wird eine Behandlung der Minenwässer durch eine Belüftung mit anschließender Zugabe eines alkalischen Stoffs wie Kalk, Kalkstein, Natronlauge oder Flugasche beschrieben. Dabei wird eine Ausfällung von Metallhydroxiden und mineralischen Phasen in Form von Gips aus den Minenwässern bewirkt. Die Ausfällungen werden sedimentiert oder filtriert, wobei große Mengen an Schlamm anfallen, der deponiert werden muss. Das behandelte Wasser enthält große Mengen an Sulfaten, so dass eine unmittelbare Wiederverwendung oder Einleitung in ein Abwassersystem nicht in Frage kommt.

Zweitens wird eine Behandlung der Minenwässer durch biologische Behandlung mittels aerober und anaerober Pflanzenkläranlagen oder auch durch Sulfat-reduzierende Bakterien beschreiben. Dies ist ein kostengünstiger, jedoch langsam verlaufender Prozess. Eine Rückgewinnung oder Wiederverwendung des in den Minenwässern enthaltenen Wassers unterbleibt.

Weiterhin wird eine Behandlung der Minenwässer mittels einer Membranfiltration, insbesondere einer Nanofiltration oder Umkehrosmose, vorgeschlagen. Es handelt sich dabei um Filterprozesse, die unter Druck stattfinden, wobei ein Aufgabestrom an Minenwässern in zwei Teilströme aufgespalten wird. Bei dem ersten gebildeten Teilstrom handelt es sich um das sogenannte Permeat, hier in Form eines überwiegenden Teils des Wassers aus dem Aufgabestrom, das durch die semipermeable Membrane gelangt. Das Permeat bildet ein niedrig mineralisiertes Prozesswasser mit saurem pH-Wert im Bereich von üblicherweise etwa pH = 4 bis 5. Es kann in dieser Form in die Umwelt abgegeben werden, beispielsweise in ein fließendes Gewässer oder verbrauchtes Leitungswasser. Das Permeat wird aber bevorzugt neutralisiert und/oder mit anderen Wässern, beispielsweise frischem Leitungswasser, gemischt und verdünnt, um es als Prozesswasser wiederzuverwenden. Bei dem zweiten Teilstrom handelt es sich um das Konzentrat, das einen kleinen Rest des Wassers mit den im Aufgabestrom im Wesentlichen enthaltenen Verunreinigungen umfasst.

Im Labormaßstab, wobei eine Membrane mit einer Membranfläche von 63 cm² eingesetzt wurde, wurde dabei eine Bildung von Ablagerungen auf der Membranoberfläche beobachtet, auch "Scaling" genannt, die aufgrund einer Abscheidung von anorganischen Verbindungen infolge einer erhöhten Konzentration an gelösten Salzen im Bereich der Membrane auftritt. Harte Minenwässer, welche Mg²⁺ - und Ca²⁺ - Ionen enthalten und aufgrund der chemischen Zusammensetzung des vorliegenden Gesteins entstehen, bilden unlösliche Sulfatminerale wie Gips aus, sobald deren Löslichkeitsgrenze überschritten wird. Auch eine pH-Wert-abhängige Bildung kolloidaler Metallhydroxide, welche als kolloidales Fouling bezeichnet wird, kann auftreten. Diese Vorgänge behindern Membranfiltrationsvorgänge und mindern deren Effizienz.

Eine Studie zur Untersuchung der Anwendbarkeit von Nanofiltrations- und Umkehrosmosemembranverfahren für die Behandlung von Minenwasser im Labormaßstab wurde von H. Al-Zoubi et al. beschrieben ("Optimization Study for Treatment of Acid Mine Drainage Using Membrane Technology", Separation Science and Technology, 45, 2010, S. 2004-2016).

In der Veröffentlichung "Treatment of Acid Mine Drainage (AMD) by Ultra-Low-Pressure Reverse Osmosis and Nanofiltration" von Z. Chang-Ming et al., publiziert in ENVIRONMENTAL ENGINEERING SCIENCE, Vol. 24, Nr. 9, 2007, S. 1297-1306, wird ebenfalls die Eignung einer Niederdruck-Umkehrosmose sowie einer Nanofiltration zur Behandlung von Minenwasser untersucht.

Es ist Aufgabe der Erfindung, ein effizientes Verfahren zur industriellen Aufarbeitung von Minenwässern aus Bergbaubetrieben mittels einer Membranfiltration bereitzustellen. Die Aufgabe wird gelöst durch ein Verfahren zur Aufarbeitung von Minenwässern mittels einer Membranfiltrationsanlage, umfassend
- mindestens ein Membranfiltermodul mit mindestens einer Membrane mit einer filteraktiven Membranfläche von mindestens 0,5 m²,
- mindestens eine Zulaufeinrichtung für die Minenwässer,
- mindestens eine Fördereinrichtung zur Überführung der Minenwässer von der mindestens einen Zulaufeinrichtung in das mindestens eine Membranfiltermodul, und
- mindestens je eine Abführeinrichtung je Membranfiltermodul für gebildetes Permeat und Konzentrat, indem die Minenwässer in der mindestens einen Zulaufeinrichtung bereitgestellt werden, mittels der mindestens einen Fördereinrichtung zu dem mindestens einen Membranfiltermodul gefördert und dort einer Membranfiltration unterzogen werden, und indem die Minenwässer dem mindestens einen Membranfiltermodul mit einem pH-Wert im Bereich von 2 bis < 7 zugeführt werden und die Minenwässer das mindestens eine Membranfiltermodul überwiegend turbulent durchströmen.

Es hat sich nämlich überraschend gezeigt, dass eine Bildung von Ablagerungen auf der Membrane bei Ausbildung einer turbulenten Strömung im Aufgabestrom an Minenwässern deutlich verringert und somit die Effizienz des Membranfiltrationsverfahrens auch über lange Betriebsdauern hoch bleibt. Das sogenannte "Scaling" oder kolloidale Fouling wird auf ein Maß reduziert, dass ein sporadisches Reinigen des Membranfiltersmoduls ausreicht, um den Filtrationsbetrieb dauerhaft auf hohem Effizienzniveau durchführen zu können.

Unter einer "überwiegend" turbulenten Durchströmung wird hier verstanden, dass der Aufgabestrom an Minenwässern innerhalb des jeweiligen Membranfiltermoduls, insbesondere im Kontaktbereich mit den Membranoberflächen, keine durchgehend laminare Strömung ausbilden soll, sondern in den meisten Bereichen eine turbulente Strömung vorliegen soll. Dies schließt allerdings nicht aus, dass dennoch in einigen wenigen, örtlich begrenzten Bereichen eine laminare Strömung vorliegen kann.

Gemäß der Erfindung sollen jedoch mehr als 50% der filteraktiven Membranfläche mit einem turbulent strömenden Aufgabestrom beaufschlagt sein.

Als "filteraktiv" wird ein Bereich einer Membranfläche bezeichnet, wenn dieser in Kontakt zum Aufgabestrom an Minenwässern steht und einen Durchtritt an Permeat ermöglicht.

Mittels des erfindungsgemäßen Verfahrens können insbesondere Minenwässer aus Bergbaubetrieben mit sulfidischen und/oder schwefelhaltigen Mineralien oder Erzen aufgearbeitet werden.

Bevorzugt werden mittels des erfindungsgemäßen Verfahrens Minenwässer mit einem pH-Wert im Bereich von 2 bis < 7, insbesondere mit einem pH-Wert im Bereich von 2 bis 4, aufgearbeitet. Bei langfristig vorhandenen pH-Werten < 2 wird derzeit von einer irreversiblen Schädigung der Membran ausgegangen, die die Effizienz des Membranfiltrationsprozesses auf Dauer mindert.

Es hat sich bewährt, wenn die Membranfiltration mittels mindestens eines Membranfiltermoduls durchgeführt wird, dessen Membranfläche > 5 m², insbesondere > 7 m², beträgt. Dadurch können große Mengen an Minenwässern in kurzer Zeit aufgearbeitet werden.

Insbesondere wird das mindestens eine Membranfiltermodul derart betrieben, dass pro Stunde ein Permeatstrom im Bereich von 10 bis 40 Liter pro m² vorhandener Membranfläche abgeführt wird. Bei einer bevorzugten Membranfläche von 7 m² werden somit 70 bis 280 L/h pro Membranfiltermodul an Permeat, gebildet, das beispielsweise nach einer Neutralisation und/oder Beimischung von Leitungswasser wieder- oder weiterverwendet werden kann.

Um große Mengen an Permeat zu erzeugen, ist es bevorzugt, wenn dem mindestens einen Membranmodul mittels der mindestens einen Fördereinrichtung die Minenwässer mit einem Druck im Bereich von 10 bis 30 bar zugeführt werden. Mit steigendem Druck steigen auch die erzielbaren Permeatmengen.

Das mindestens eine Membranfiltermodul ist insbesondere derart aufgebaut, dass eine Strömungsrichtung der Minenwässer beim Durchströmen des Membranfiltermoduls sich mindestens zweimal abrupt um 180° ändert, um die turbulente Strömung zu erzeugen. Dies kann durch eine abrupte Umkehrung der Strömungsrichtung oder einen Einbau von Verwirbelungselementen im Strömungsverlauf erfolgen.

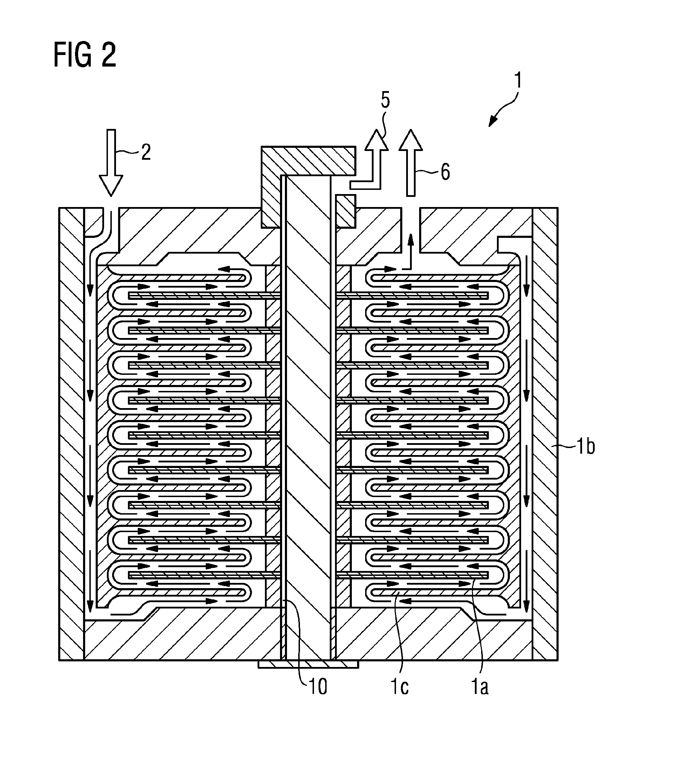

Auf dem Markt werden für den industriellen Gebrauch ausgelegte Membranfiltermodule beispielsweise von der Firma Pall GmbH, 63303 Dreieich angeboten. Sie dienen laut Hersteller zur Aufbereitung und Enthärtung von Grundwasser, Entsalzung von Meerwasser, Filterung und Reinigung von Sickerwasser aus Mülldeponien, Filterung und Enthärtung von Oberflächenwasser, und Behandlung industrieller Abfälle und Abschlämmen aus Kesseln von Kühltürmen. Die unter der Bezeichnung Pall Disc Tube^{®} angebotenen Membranfiltermodule weisen einen idealen Aufbau zur Erzeugung einer turbulenten Strömung im das Membranfiltermodul durchströmenden Fluid auf und sind daher überraschender Weise auch zum Einsatz in einer Membranfilteranlage zur Aufarbeitung von Minenwässern gemäß dem erfindungsgemäßen Verfahren einsetzbar (vergleiche hierzu auch FIG 2). Die Minenwässer strömen hier an strömungstechnisch in Serie geschalteten, voneinander durch Trennplatten beabstandeten und parallel ausgerichteten scheibenförmigen Membranfiltern entlang und werden im Bereich der Kanten der Membranen um 180° umgelenkt, so dass eine turbulente Strömung entsteht. Bevorzugt umfasst das Membranfiltermodul mindestens eine Nanofiltermembrane. Dabei haben sich Membranen vom Typ Alfalaval NF99 als besonders geeignet erwiesen.

Das gebildete Konzentrat wird im erfindungsgemäßen Verfahren nachfolgend in eine galvanische Zelleneinheit überführt, in welcher enthaltene Metallionen unter Bildung eines metallfreien Konzentrats ausgefällt werden. Dadurch wird verhindert, dass gesundheitsschädliche oder giftige Metalle in großen Mengen in die Umwelt gelangen.

Das nun metallfreie Konzentrat wird danach von der galvanischen Zelleneinheit in ein Reaktionsbecken überführt, wobei unter Rühren und/oder Eindüsen von Gas, insbesondere Luft oder Sauerstoff, eine Zugabe eines alkalischen Stoffs, insbesondere von Kalkmilch, zum metallfreien Konzentrats erfolgt. Dabei wird ein Mischkonzentrat erzeugt, aus welchem Gips ausgefällt wird.

Das Mischkonzentrat wird anschließend in ein Absetzbecken überführt, in welchem der ausgefällte Gips sedimentiert. Das Überlaufwasser des Absetzbeckens wird aufgefangen und noch aufzubereitenden Minenwässern beigemischt. Mittels der mindestens einen Fördereinrichtung wird es nun wieder dem mindestens einen Membranfiltermodul zugeführt und die Ausbeute an Permeat somit erhöht. Diese Vorgehensweise ermöglicht eine saubere Trennung der in den Minenwässern enthaltenen Stoffe einmal in Wasser in trinkbarer Qualität, andererseits Metalle und weiterhin Gips, so dass jeweils eine gezielte Weiterverwendung ohne das Risiko einer Umweltgefährdung möglich ist.

Das Permeat wird, vorzugsweise nach einer Neutralisation oder Beimischung von Leitungswasser, zur Bildung von Prozess- und/oder Aufbereitungswässern in einem die Minenwässer hervorbringenden Bergbaubetrieb verwendet. Es kann beispielsweise kostensparend zum Bohren, Fräsen, Mahlen, Flotieren usw. eingesetzt werden.

Es hat sich bewährt, wenn das mindestens eine Membranfiltermodul, als die Effizienz des Membranfiltrationsprozesses im Dauerbetrieb erhaltende Maßnahme, gereinigt wird, indem eine Reinigungsflüssigkeit hindurchgeleitet wird, sobald sich der Permeatstrom gegenüber einem Referenzpermeatstrom, der dem Permeatstrom bei einer Erstverwendung des Membranfiltermoduls unter gleichen Bedingungen entspricht, um mindestens 5 %, insbesondere um 5 bis 20 %, verringert hat.

Dabei werden von den Membranherstellern geeignete Reinigungsflüssigkeiten für den jeweiligen Membrantyp angeboten und üblicherweise auch eine Reinigungsanleitung bereitgestellt.

Eventuelle Ablagerungen aufgrund von "Scaling", kolloidalem Fouling oder sonstigen biologischen Faulvorgängen auf der Membran werden dadurch aufgelöst und aus dem Membranfiltermodul ausgespült.

Die Figuren 1 bis 3 sollen das erfindungsgemäße Verfahren beispielhaft erläutern. So zeigt
FIG 1 einen aus dem Stand der Technik bekannten Verfahrenablauf,
FIG 2 ein Membranfiltermodul gemäß dem Stand der Technik, im Längsschnitt und
FIG 3 einen erfindungsgemäßen Verfahrensablauf.

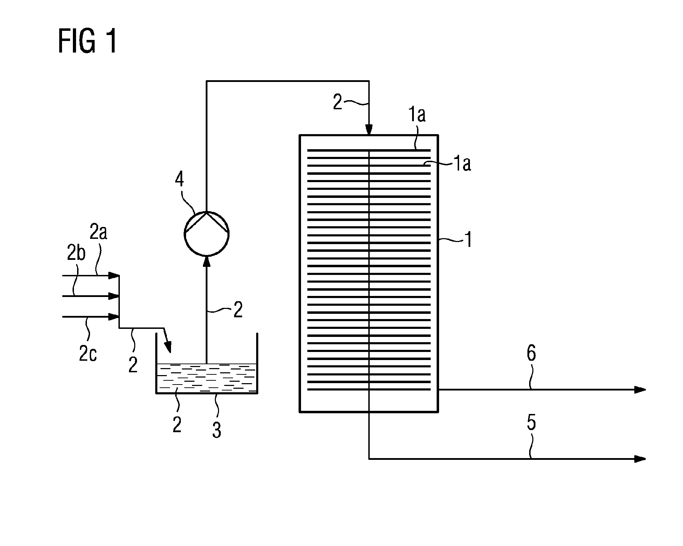

FIG 1 zeigt den Verfahrensablauf eines Verfahrens zur Aufarbeitung von Minenwässern 2 mittels einer Membranfiltrationsanlage. Diese umfasst hier ein lediglich schematisch dargestelltes Membranfiltermodul 1 mit einer Vielzahl an scheibenförmigen, parallel zueinander ausgerichteten Membranen 1a mit einer filteraktiven Membranfläche von mindestens 5 m². Die Membranfiltrationsanlage umfasst weiterhin eine Zulaufeinrichtung 3 für die Minenwässer 2 in Form eines Auffangbehälters, in welchen die Prozesswässer 2a, Aufbereitungswässer 2b und Sickerwässer 2c, welche in Summe die Minenwässer 2 bilden, eingeleitet werden. Die Minenwässer 2 werden dem Membranfiltermodul 1 mit einem pH-Wert im Bereich von 2 bis < 7 zugeführt. Weiterhin ist eine Fördereinrichtung 4, hier in Form einer Pumpe, zur Überführung der Minenwässer 2 von der Zulaufeinrichtung 3 in das Membranfiltermodul 1 vorhanden. Die Fördereinrichtung setzt die Minenwässer 2 unter Druck, insbesondere im Bereich von 10 bis 30 bar. Die Minenwässer 2 werden im Membranfiltermodul 1 einer Membranfiltration unterzogen, wobei die Minenwässer 2 das Membranfiltermodul 1 überwiegend turbulent durchströmen (siehe FIG 2). Als Membranen 1a wurden Nanofiltermembranen des Typs Alfalaval NF99 verwendet. Das durch die Membrane tretende Permeat 5 liegt in Form von Wasser in einer Qualität vor, die eine Wieder- oder Weiterverwendung zur Bildung von beispielsweise Prozess- und/oder Aufbereitungswässern ermöglicht. Ein nicht durch die Membrane 1a tretender Rest bildet das Konzentrat 6. Das Membranfiltermodul 1 weist je eine hier nicht im Detail dargestellte Abführeinrichtung für gebildetes Permeat 5 und Konzentrat 6 auf.

FIG 2 zeigt den schematischen Aufbau eines verwendbaren Membranfiltermoduls 1 gemäß dem Stand der Technik in Längsschnitt, das bisher lediglich zur Aufbereitung und Enthärtung von Grundwasser, Entsalzung von Meerwasser, Filterung und Reinigung von Sickerwasser aus Mülldeponien, Filterung und Enthärtung von Oberflächenwasser, und Behandlung industrieller Abfälle und Abschlämmen aus Kesseln von Kühltürmen eingesetzt wurde. Dieses bekannte Membranfiltermodul 1 der Fa. Pall GmbH wird hier lediglich beispielhaft für jegliche Art an Membranfiltermodul gezeigt, das eine turbulente Strömung des Aufgabestroms an Minenwässern 2 im Bereich der filteraktiven Membranflächen ermöglicht. Es ist natürlich ohne weiteres möglich, auch Membranfiltermodule völlig anderer Bauart einzusetzen.

Das Minenwasser 2 wird unter Druck in das Membranfiltermodul 1 eingeleitet und mäanderförmig zwischen abwechselnd angeordneten Trennplatten 1b und Membranen 1a hindurchgeführt. Durch die Membranen 1a hindurch gelangendes Permeat 5 wird zu einem zentralen Sammelbereich 10 geführt und von dort aus dem Membranfiltermodul 1 ausgeleitet. Das Membranfiltermodul 1 wird dabei derart betrieben, dass pro Stunde ein Permeatstrom im Bereich von 10 bis 40 Liter pro m² vorhandener Membranfläche abgeführt werden kann. Der nicht durch die Membranen 1a gelangende Rest der Minenwässer 2 wird als Konzentrat 6, enthaltend einen Rest an Wasser und Verunreinigungen, aus dem Membranfiltermodul 1 ausgeleitet. Innerhalb des Membranfiltermoduls 1 wird die Strömungsrichtung des Aufgabestroms an Minenwässern 2 immer wieder abrupt um 180° geändert, wobei sich eine überwiegend turbulente Strömung ausbildet. Diese verhindert ein "Scaling" und ein kolloidales Fouling im Bereich der Membranoberflächen, so dass die Effizienz des Membranfiltrationsprozesses über lange Zeiträume, insbesondere von über einem halben Jahr, auf hohem Niveau gewährleistet ist.

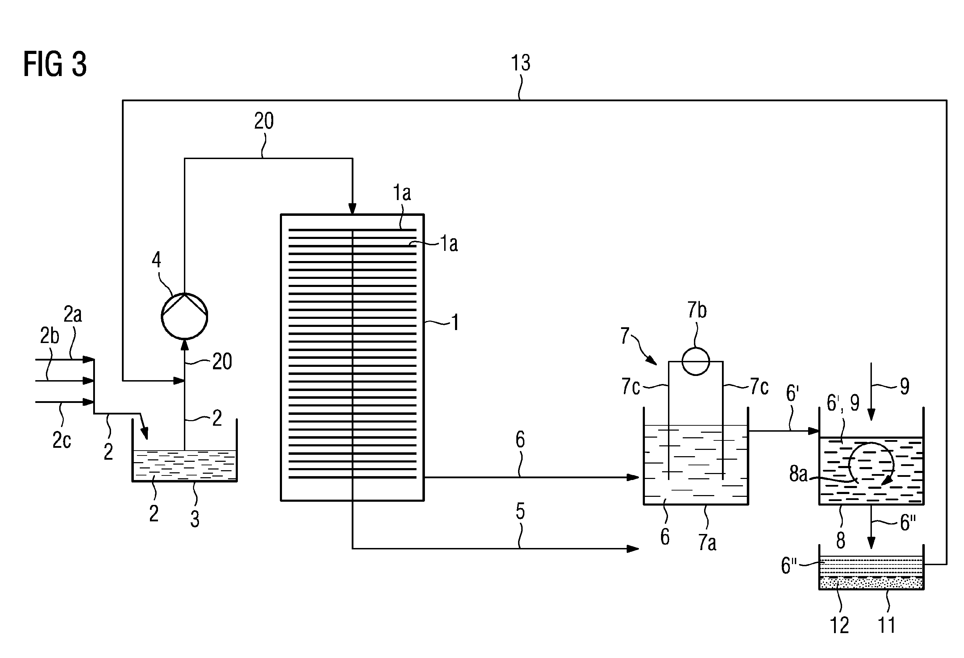

FIG 3 zeigt einen erfindungsgemäßen Verfahrensablauf eines Verfahrens zur Aufarbeitung von Minenwässern 2 mittels einer Membranfiltrationsanlage. Gleiche Bezugszeichen wie in FIG 1 bezeichnen gleiche Elemente. Wie in FIG 1 bereits gezeigt, ist ein lediglich schematisch dargestelltes Membranfiltermodul 1 mit einer Vielzahl an scheibenförmigen, parallel zueinander ausgerichteten Membranen 1a mit einer filteraktiven Membranfläche von mindestens 5 m² vorhanden. Die Membranfiltrationsanlage umfasst weiterhin eine Zulaufeinrichtung 3 für die Minenwässer 2 in Form eines Auffangbehälters, in welchen die Prozesswässer 2a, Aufbereitungswässer 2b und Sickerwässer 2c, welche in Summe die Minenwässer 2 bilden, eingeleitet werden. Die Minenwässer 2 werden dem Membranfiltermodul 1 mit einem pH-Wert im Bereich von 2 bis < 7 zugeführt. Weiterhin ist eine Fördereinrichtung 4, hier in Form einer Pumpe, zur Überführung der Minenwässer 2 von der Zulaufeinrichtung 3 in das Membranfiltermodul 1 vorhanden. Die Fördereinrichtung setzt die Minenwässer 2 unter Druck, insbesondere im Bereich von 10 bis 30 bar. Die Minenwässer 2 werden im Membranfiltermodul 1 einer Membranfiltration unterzogen, wobei die Minenwässer 2 das Membranfiltermodul 1 überwiegend turbulent durchströmen (siehe FIG 2). Als Membranen 1a wurden Nanofiltermembranen des Typs Alfalaval NF99 verwendet. Das durch die Membrane tretende Permeat 5 liegt in Form von Wasser in trinkbarer Qualität vor. Ein nicht durch die Membrane 1a tretender Rest bildet das Konzentrat 6. Das Membranfiltermodul 1 weist je eine hier nicht im Detail dargestellte Abführeinrichtung für gebildetes Permeat 5 und Konzentrat 6 auf.

In dem erfindungsgemäßen Verfahren wird das Konzentrat 6 in eine galvanische Zelleneinheit 7 überführt, welche einen Behälter 7a für das Konzentrat 6, eine Gleichspannungsquelle 7b und die Elektroden 7c umfasst, welche in das Konzentrat 6 eintauchen. Im Konzentrat 6 enthaltene Metallionen werden bei Anlagen einer Gleichspannung unter Bildung eines metallfreien Konzentrats 6' ausgefällt und lagern sich an der positiv geladenen Elektrode der Elektroden 7c an.

Das metallfreie Konzentrat 6' wird nun von der galvanischen Zelleneinheit 7 in ein Reaktionsbecken 8 überführt, wobei unter Rühren und/oder Eindüsen von Gas, insbesondere Luft oder Sauerstoff, eine Zugabe eines alkalischen Stoffs 9, insbesondere von Kalkmilch, zum metallfreien Konzentrats 6' erfolgt. Es wird ein Mischkonzentrat 6" erzeugt, aus welchem Gips 12 ausgefällt wird. Das Mischkonzentrat 6" wird nun in ein Absetzbecken 11 überführt, in welchem der ausgefällte Gips 12 sedimentiert. Das Überlaufwasser 13 des Absetzbeckens 11 wird noch aufzubereitenden Minenwässern 2 beigemischt und mittels der Fördereinrichtung 4 wieder dem Membranfiltermodul 1 zugeführt, um die Ausbeute an Permeat 5 zu erhöhen.

Das Permeat 5 wird vorzugsweise als Frischwasser in einem die Minenwässer 2 hervorbringenden Bergbaubetrieb verwendet. Es kann beispielsweise kostensparend zum Bohren, Fräsen, Mahlen, Flotieren usw. eingesetzt werden.

Beim Reinigen des Membranfiltermoduls 1 wird anstelle der Minenwässer 2 eine Reinigungsflüssigkeit des Membranherstellers durch das Membranfiltermodul 1 geleitet. Dies erfolgt insbesondere, sobald sich der Permeatstrom gegenüber einem Referenzpermeatstrom, der dem Permeatstrom bei einer Erstverwendung des Membranfiltermoduls 1 unter gleichen Bedingungen entspricht, um mindestens 5 %, insbesondere um 5 bis 20 %, verringert hat.

Wird beispielsweise im Erstbetrieb des Membranfiltermoduls 1 ein Permeatstrom von 40 L/m²_{*}h erreicht, wird eine Reinigung beispielsweise frühestens nach einer Betriebsdauer bei gleichen Bedingungen durchgeführt, bei der der Permeatstrom auf 38 L/m²_{*}h abgesunken ist.

Eventuelle Ablagerungen aufgrund von "Scaling", kolloidalem Fouling oder sonstigen biologischen Faulvorgängen auf den Membranen 1a werden dadurch aufgelöst und aus dem Membranfiltermodul 1 ausgespült.

Die Figuren 1 bis 3 sollen dabei das erfindungsgemäße Verfahren lediglich beispielhaft erläutern. So können mehrere Membranfiltermodule parallel betreiben werden, eine getrennte Aufarbeitung von Prozesswässern, Aufbereitungswässern und Sickerwässern erfolgen, Membranfiltermodule anderer Bauart eingesetzt werden usw., ohne das erfindungsgemäße Verfahren zu verlassen.

## Patentansprüche

1. Verfahren zur Aufarbeitung von Minenwässern (2) mittels einer Membranfiltrationsanlage, umfassend
- mindestens ein Membranfiltermodul (1) mit mindestens einer Membrane (1a) mit einer filteraktiven Membranfläche von mindestens 0,5 ₘ²,
- mindestens eine Zulaufeinrichtung (3) für die Minenwässer (2),
- mindestens eine Fördereinrichtung (4) zur Überführung der Minenwässer (2) von der mindestens einen Zulaufeinrichtung in das mindestens eine Membranfiltermodul (1), und
- mindestens je eine Abführeinrichtung je Membranfiltermodul (1) für gebildetes Permeat (5) und Konzentrat (6),
wobei die Minenwässer (2) in der mindestens einen Zulaufeinrichtung (3) bereitgestellt werden, mittels der mindestens einen Fördereinrichtung (4) zu dem mindestens einen Membranfiltermodul (1) gefördert und dort einer Membranfiltration unterzogen werden, wobei die Minenwässer (2) dem mindestens einen Membranfiltermodul (1) mit einem pH-Wert im Bereich von 2 bis < 7 zugeführt werden, wobei die Minenwässer (2) das mindestens eine Membranfiltermodul (1) derart durchströmen, dass mehr als 50 % der filteraktiven Membranfläche mit einer turbulenten Strömung beaufschlagt wird, wobei das gebildete Konzentrat (6) in eine galvanische Zelleneinheit (7) überführt wird, in welcher im Konzentrat (6) enthaltene Metallionen unter Bildung eines metallfreien Konzentrats (6') ausgefällt werden, wobei das metallfreie Konzentrat (6') von der galvanischen Zelleneinheit (7) in ein Reaktionsbecken (8) überführt wird, wobei unter Rühren und/oder Eindüsen von Gas eine Zugabe eines alkalischen Stoffs (9) zum metallfreien Konzentrat (6') erfolgt, wobei ein Mischkonzentrat (6") erzeugt wird, aus welchem Gips (12) ausgefällt wird, und wobei das Mischkonzentrat (6") in ein Absetzbecken (11) überführt wird, in welchem der ausgefällte Gips (12) sedimentiert und wobei ein Überlaufwasser (13) des Absetzbeckens (11) noch aufzubereitenden Minenwässern (2) beigemischt und mittels der mindestens einen Fördereinrichtung (4) wieder dem mindestens einen Membranfiltermodul (1) zugeführt wird.

2. Verfahren nach Anspruch 1, wobei die Membranfiltration mittels des mindestens einen Membranfiltermoduls (1), dessen Membranfläche > 5 m², insbesondere > 7 m², beträgt, durchgeführt wird.

3. Verfahren nach einem der Ansprüche 1 oder 2, wobei das mindestens eine Membranfiltermodul (1) derart betrieben wird, dass pro Stunde ein Permeatstrom im Bereich von 10 bis 40 Liter pro m² vorhandener Membranfläche abgeführt wird.

4. Verfahren nach einem der Ansprüche 1 bis 3, wobei dem mindestens einen Membranfiltermodul (1) mittels der mindestens einen Fördereinrichtung (4) die Minenwässer (2) mit einem Druck im Bereich von 10 bis 30 bar zugeführt werden.

5. Verfahren nach einem der Ansprüche 1 bis 4, wobei das mindestens eine Membranfiltermodul (1) derart aufgebaut ist, dass eine Strömungsrichtung der Minenwässer (2) beim Durchströmen des Membranfiltermoduls (1) sich mindestens zweimal abrupt, insbesondere um 180°, ändert, um die turbulente Strömung zu erzeugen.

6. Verfahren nach einem der Ansprüche 1 bis 5, wobei das Membranfiltermodul (1) mindestens eine Nanofiltermembran umfasst.

7. Verfahren nach einem der Ansprüche 1 bis 6, wobei das Permeat (5) in einem die Minenwässer (2) hervorbringenden Bergbaubetrieb, insbesondere zur Bildung von Prozess- und/oder Aufbereitungswässern, wiederverwendet wird.

8. Verfahren nach einem der Ansprüche 3 bis 7, wobei das mindestens eine Membranfiltermodul (1) gereinigt wird, indem eine Reinigungsflüssigkeit hindurchgeleitet wird, sobald sich der Permeatstrom gegenüber einem Referenzpermeatstrom, der dem Permeatstrom bei einer Erstverwendung des Membranfiltermoduls (1) unter gleichen Bedingungen entspricht, um mindestens 5 %, insbesondere um 5 bis 20 %, verringert hat.

## Claims

1. Method for processing mine waters (2) by means of a membrane filtration apparatus, comprising
- at least one membrane filter module (1) with at least one membrane (la) with a filter-active membrane surface of at least 0.5m²,
- at least one inflow device (3) for the mine water (2),
- at least one conveying device (4) for taking the mine water (2) from the at least one inflow device into the at least one membrane filter module (1), and
- at least one discharge device per membrane filter module (1) in each case for permeate (5) and concentrate (6) formed,
wherein the mine water (2) is provided in the at least one inflow device (3), is conveyed by means of the at least one conveying device (4) to the at least one membrane filter module (1) and undergoes membrane filtration there, wherein the mine water (2) is supplied to the at least one membrane filter module (1) with a pH value ranging from 2 to < 7, wherein the mine water (2) flows through the at least one membrane filter module (1) such that more than 50% of the filter-active membrane surface has a turbulent flow applied to it, wherein the concentrate (6) formed is transferred into a galvanic cell unit (7) in which metal ions contained in the concentrate (6) are filtered out while a metal-free concentrate (6') is formed, wherein the metal-free concentrate (6') is transferred from the galvanic cell unit (7) into a reaction beaker (8), wherein an alkali substance (9) is added to the metal-free concentrate (6') while stirring and/or injecting gas, wherein a mixed concentrate (6") is created, from which gypsum (12) is precipitated, and wherein the mixed concentrate (6") is transferred into a settling beaker (11), in which the precipitated gypsum (12) sediments and wherein overflow water (13) of the settling beaker (11) is mixed into mine waters (2) still to be processed and is fed again by means of the at least one conveying device (4) to the at least one membrane filter module (1).

2. Method according to claim 1, wherein the membrane filtration is carried out by means of the at least one membrane filter module (1), of which the membrane surface amounts to > 5m², especially > 7m².

3. Method according to one of claims 1 or 2, wherein the at least one membrane filter module (1) is operated such that per hour a permeate flow ranging from 10 to 40 litres per m² of available membrane surface is discharged.

4. Method according to one of claims 1 to 3, wherein the mine water (2) is fed to the at least one membrane filter module (1) by means of the at least one conveying device (4) with a pressure ranging from 10 to 30 bar.

5. Method according to one of claims 1 to 4, wherein the at least one membrane filter module (1) is constructed such that a flow direction of the mine water (2), when flowing through the membrane filter module (1), changes at least twice abruptly, especially by 180°, in order to create the turbulent flow.

6. Method according to one of claims 1 to 5, wherein the membrane filter module (1) comprises at least one nanofilter membrane.

7. Method according to one of claims 1 to 6, wherein the permeate (5) is re-used in a mining operation producing the mine water (2), especially for forming process and/or treatment waters.

8. Method according to one of claims 3 to 7, wherein the at least one membrane filter module (1) is cleaned by having a cleaning fluid passed through it as soon as the permeate flow has reduced in relation to a reference permeate flow, which corresponds to the permeate flow during a first use of the membrane filter module (1) under the same conditions, by at least 5%, especially by 5 to 20%.

## Revendications

1. Procédé de traitement d'eaux ( 2 ) de mines au moyen d'une installation de filtration à membrane, comprenant
- au moins un module ( 1 ) de filtre à membrane comprenant au moins une membrane ( 1a ) ayant une surface de membrane active en filtration d'au moins 0,5 m²,
- au moins un dispositif ( 3 ) d'afflux des eaux ( 2 ) de mines,
- au moins un dispositif ( 4 ) convoyeur pour transvaser les eaux ( 2 ) de mines du au moins un dispositif d'afflux au au moins un module ( 1 ) de filtre à membrane, et
- au moins un dispositif d'évacuation par module ( 1 ) de filtre à membrane pour le produit ( 5 ) qui a perméé et pour le produit ( 6 ) concentré,
dans lequel on prépare les eaux ( 2 ) de mines dans le au moins un dispositif ( 3 ) d'afflux, on les transporte au moyen du au moins un dispositif ( 4 ) convoyeur au au moins un module ( 1 ) de filtre à membrane et on les y soumet à une filtration par membrane, les eaux ( 2 ) de mines étant envoyées au au moins un module ( 1 ) de filtre à membrane en ayant un pH de l'ordre de 2 à < 7, les eaux ( 2 ) de mines traversant le au moins un module ( 1 ) de filtre à membrane de manière à ce que de plus 50% de la surface de la membrane active en filtration soit alimentée en un écoulement turbulent, le produit ( 6 ) concentré formé étant transvasé dans une unité ( 7 ) de cellule galvanique, dans laquelle des ions métalliques contenus dans le produit ( 6 ) concentré précipitent avec formation d'un produit ( 6' ) concentré exempt de métal, le produit ( 6' ) concentré exempt de métal étant transvasé de l'unité ( 7 ) de cellule galvanique dans un bassin ( 8 ) de réaction dans lequel, en agitant et/ou en insufflant du gaz, on effectue une addition de substance ( 9 ) alcaline au produit ( 6' ) concentré exempt de métal, en obtenant un produit ( 6" ) concentré mélangé, dont le sulfate de calcium ( 12 ) est précipité et dans lequel on transvase le produit ( 6" ) concentré mélangé dans un bassin ( 11 ) de décantation, dans lequel le sulfate ( 12 ) de calcium précipité sédimente et dans lequel on ajoute encore de l'eau ( 13 ) de trop plein du bassin ( 11 ) de décantation à des eaux ( 2 ) de mines à traiter et on l'envoie à nouveau au au moins un module ( 1 ) de filtre à membrane à l'aide du au moins un dispositif ( 4 ) convoyeur.

2. Procédé suivant la revendication 1, dans lequel on effectue la filtration par membrane au moyen du au moins un module de filtre à membrane, dont la surface de la membrane est > à 5 m², en étant notamment > à 7 m².

3. Procédé suivant l'une des revendications 1 ou 2, dans lequel on fait fonctionner le au moins un module ( 1 ) de filtre à membrane de manière à évacuer à l'heure un courant de produit qui a perméé de 10 à 40 litres par m² de surface de membrane présente.

4. Procédé suivant l'une des revendications 1 à 3, dans lequel on envoie les eaux ( 2 ) de mines sous une pression comprise entre 10 et 30 bar au au moins un module ( 1 ) de filtre à membrane à l'aide du au moins un dispositif ( 4 ) convoyeur.

5. Procédé suivant l'une des revendications 1 à 4, dans lequel le au moins un module ( 1 ) de filtre à membrane est formé de manière à modifier une direction d'écoulement des eaux ( 2 ) de mines lors du passage dans le module ( 1 ) de filtre à membrane d'une manière abrupte au moins deux fois, notamment de 180°, pour produire l'écoulement turbulent.

6. Procédé suivant l'une des revendications 1 à 5, dans lequel le module ( 1 ) de filtre à membrane comprend au moins une membre à nanofiltre.

7. Procédé suivant l'une des revendications 1 à 6, dans lequel on réutilise le produit ( 5 ) qui a perméé dans un fonctionnement d'exploitation minière donnant les eaux ( 2 ) de mines, notamment pour former des eaux de processus et/ou des eaux de traitement.

8. Procédé suivant l'une des revendications 3 à 7, dans lequel on nettoie le module ( 1 ) de filtre à membrane en y faisant passer un liquide de nettoyage dès que le courant de produit qui a perméé a diminué d'au moins 5%, notamment de 5 à 20% par rapport à un courant de produit de référence qui a perméé, qui correspond au courant de produit qui a perméé lors d'une première utilisation du module ( 1 ) de filtre à membrane dans les mêmes conditions.
